# EUROPÄISCHE PATENTSCHRIFT

(11) **EP 3 593 217 B1**
(45) Veröffentlichungstag und Bekanntmachung des Hinweises auf die Patenterteilung: **16.09.2020**
(21) Anmeldenummer: 18731786.2
(22) Anmeldetag: 11.06.2018
(51) Int. Cl.: B60K 28/04, G06K 9/00, G08C 17/00, B60W 30/06

(54) **VERFAHREN ZUR AUSFÜHRUNG EINES AUTONOMEN FAHRVORGANGS EINES FAHRZEUGS**
METHOD TO PERFORM AN AUTONOMOUS DRIVING PROCESS OF A VEHICLE
PROCÉDÉ POUR EFFECTUER UN PROCES DE CONDUITE AUTONOME D'UN VÉHICULE

(30) Priorität: 29.07.2017 DE 102017007215
(43) Veröffentlichungstag der Anmeldung: 15.01.2020
(73) Patentinhaber: Daimler AG, 70372 Stuttgart (DE)
(72) Erfinder: POELLNY, Oliver, 70376 Stuttgart (DE)
(74) Vertreter: JENSEN & SON
(86) Internationale Anmeldenummer: PCT/EP2018/065377
(87) Internationale Veröffentlichungsnummer: WO 2019/025064

(56) Entgegenhaltungen:
- DE-A1-102012 006 966
- DE-A1-102013 010 819

## Beschreibung

Die Erfindung betrifft ein Verfahren zur Ausführung eines autonomen Fahrvorgangs eines Fahrzeugs.

Aus der DE 10 2013 010 819 A1 ist ein Verfahren zur Fernsteuerung eines autonomen Fahrvorgangs eines Fahrzeugs bekannt, wobei mittels einer in der mobilen Steuereinheit integrierten Signalempfangseinheit ein Signal des Fahrzeugs erfasst wird. An einer vorgegebenen Position am Fahrzeug wird ein optisches oder ein akustisches Signal erzeugt, wobei die Fernsteuerung ausschließlich dann freigegeben wird, wenn das optische oder akustische Signal von der Signalempfangseinheit erfasst wird. Dabei ist die Steuereinheit als so genannter Totmannschalter verwendbar.

Aus der DE 10 2012 006 966 A1 ist ein Verfahren zum Auslösen einer fahrzeugseitig ausführbaren Funktion mittels blickgesteuerten Bedienens durch einen Fahrer des Fahrzeugs bekannt, wobei das blickgesteuerte Bedienen auf einer Blickrichtungserfassung des Fahrers mittels einer im Fahrzeuginnenraum vorgesehenen Kamera beruht.

Der Erfindung liegt die Aufgabe zu Grunde, ein gegenüber dem Stand der Technik verbessertes Verfahren zur Ausführung eines autonomen Fahrvorgangs eines Fahrzeugs anzugeben.

Die Aufgabe wird erfindungsgemäß mit einem Verfahren gelöst, welches die im Anspruch 1 angegebenen Merkmale aufweist.

Vorteilhafte Ausgestaltungen der Erfindung sind Gegenstand der Unteransprüche.

In dem Verfahren zur Ausführung eines autonomen Fahrvorgangs eines Fahrzeugs wird erfindungsgemäß mittels zumindest einer in einen Fahrzeuginnenraum gerichteten Kamera ein auf einem Fahrersitz befindlicher Fahrer des Fahrzeugs erfasst. Wenn der Fahrer nach Beenden einer Fahrt mittels der zumindest einen Kamera erfasst wird, wird er anschließend während und nach einem Verlassen des Fahrzeuginnenraums mittels zumindest einer weiteren Kamera erfasst, wobei anhand von mittels der zumindest einen weiteren Kamera erfassten Daten eine Blickrichtung des Fahrers ermittelt wird. Die Ausführung des autonomen Fahrvorgangs wird ausschließlich dann freigegeben, wenn erfasst wird, dass der Fahrer seinen Blick auf das Fahrzeug richtet.

Das Verfahren ermöglicht es, zuverlässig ohne Verwendung eines zusätzlichen mobilen Geräts durch den Fahrer eine fahrerseitige Observation des ausgeführten autonomen Fahrvorgangs zu erfassen. Die Observation gilt dabei als gegeben, solange eindeutig erfasst wird, dass der Fahrer auf das Fahrzeug blickt. Hierdurch kann aufgrund dessen, dass kein aktives Bestätigen der Observation durch den Fahrer erforderlich ist, einerseits ein Komfort für den Fahrer verbessert werden und andererseits ein flüssiger Übergang zwischen Fahrvorgängen mit Fahrerpräsenz im Fahrzeuginnenraum und Fahrvorgängen mit Fahrerpräsenz in einer Fahrzeugumgebung erzielt werden.

Ausführungsbeispiele der Erfindung werden im Folgenden anhand einer Zeichnung näher erläutert.

Dabei zeigt:

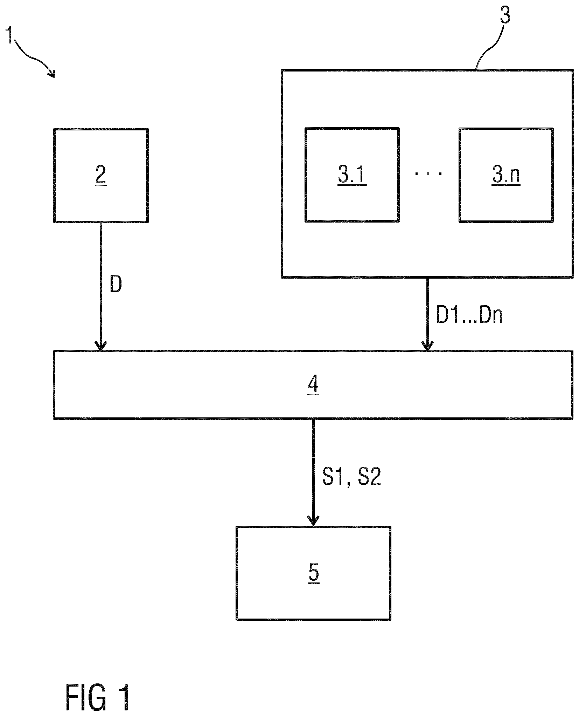

- Fig. 1: schematisch ein Blockschaltbild einer Vorrichtung zur Ausführung eines autonomen Fahrvorgangs eines Fahrzeugs.

In der einzigen Figur 1 ist ein mögliches Ausführungsbeispiel einer Vorrichtung 1 zur Ausführung eines autonomen Fahrvorgangs eines Fahrzeugs dargestellt. Das Fahrzeug ist zur Ausführung eines autonomen Fahrvorgangs, beispielsweise eines autonomen Einparkvorgangs, ausgebildet, wobei sich ein Fahrer des Fahrzeugs 1 während des autonomen Fahrvorgangs außerhalb des Fahrzeugs befindet.

Um sicherzustellen, dass der autonome Fahrvorgang von einer Person überwacht wird und bei einer Fehlfunktion abgebrochen werden kann, wird die Ausführung des autonomen Fahrvorgangs ausschließlich dann freigegeben, wenn erfasst wird, dass der Fahrer seinen Blick auf das Fahrzeug richtet.

Hierzu umfasst die Vorrichtung 1 eine, insbesondere in einem Fahrzeuginnenraum angeordnete und zu einer Fahrerbeobachtung ausgebildete Kamera 2 und ein Kamerasystem 3 mit weiteren Kameras 3.1 bis 3.n zur Erfassung einer Fahrzeugumgebung. Die Kameras 2, 3.1 bis 3.n werden automatisch aktiviert, wobei die Aktivierung insbesondere dann erfolgt, wenn der Fahrer eine Fahrt beendet. Dies wird beispielsweise durch Erfassen einer Deaktivierung einer Zündung, durch Erfassen eines Einlegens eines Parkfahrstufe "P" und/oder Betätigung einer Feststellbremse ermittelt.

Zunächst wird mittels der Kamera 2 der auf einem Fahrersitz befindliche Fahrer des Fahrzeugs nach Beenden der Fahrt erfasst. Anschließend wird der Fahrer während und nach einem Verlassen des Fahrzeuginnenraums mittels zumindest einer weiteren Kamera 3.1 bis 3.n des Kamerasystems 3 erfasst, wobei die mittels der Kameras 2, 3.1 bis 3.n erfassten Daten D, D1 bis Dn an eine Auswerteinheit 4 übermittelt werden. Hierdurch kann eine lückenlose Erfassung des Fahrers und daraus folgend eine Identifizierung desselben in der Fahrzeugumgebung sichergestellt werden.

Anhand von mittels der zumindest einen weiteren Kamera 3.1 bis 3.n erfassten Daten D1 bis Dn wird eine Blickrichtung des Fahrers ermittelt. Zu diesem Zweck führt die Auswerteeinheit 4 einen Algorithmus aus, welcher Augen des Fahrers detektiert und eine Augenbewegung des Fahrers erfasst.

Wird ermittelt, dass der Fahrer seinen Blick auf das Fahrzeug richtet, wird ein entsprechendes Steuersignal S1 von der Auswerteeinheit 4 generiert und an eine Steuereinheit 5 gesendet, welche den autonomen Fahrvorgang steuert. Mittels des Steuersignals S1 wird die Ausführung des autonomen Fahrvorgangs ausschließlich dann freigegeben, wenn erfasst wird, dass der Fahrer seinen Blick auf das Fahrzeug richtet.

Wird erfasst, dass der Fahrer seinen Blick vom Fahrzeug wegrichtet, wird die Ausführung des autonomen Fahrvorgangs unterbrochen, indem die Auswerteeinheit 4 ein entsprechendes weiteres Steuersignal S2 an die Steuereinheit 5 sendet.

Zu einer reinen Präsenz- und Observationsbestätigung des Fahrers ist keine weitere aktive Tätigkeit des Fahrers notwendig, da festgestellt wird, ob der Fahrer das Fahrzeug beobachtet.

## Patentansprüche

1. Verfahren zur Ausführung eines autonomen Fahrvorgangs eines Fahrzeugs, wobei
- mittels zumindest einer in einen Fahrzeuginnenraum gerichteten Kamera (2) ein auf einem Fahrersitz befindlicher Fahrer des Fahrzeugs erfasst wird,
**dadurch gekennzeichnet, dass**
- der Fahrer während und nach einem Verlassen des Fahrzeuginnenraums mittels zumindest einer weiteren Kamera (3.1 bis 3.n) erfasst wird, wenn er zuvor nach Beenden einer Fahrt mittels der zumindest einen Kamera (2) erfasst wurde,
- anhand von mittels der zumindest einen weiteren Kamera (3.1 bis 3.n) erfassten Daten (D1 bis Dn) eine Blickrichtung des Fahrers ermittelt wird und
- die Ausführung des autonomen Fahrvorgangs ausschließlich dann freigegeben wird, wenn erfasst wird, dass der Fahrer seinen Blick auf das Fahrzeug richtet.

2. Verfahren nach Anspruch 1,
**dadurch gekennzeichnet, dass**
die Ausführung des autonomen Fahrvorgangs unterbrochen wird, wenn der Fahrer seinen Blick vom Fahrzeug wegrichtet.

3. Verfahren nach Anspruch 1 oder 2,
**dadurch gekennzeichnet, dass**
zur Ermittlung der Blickrichtung eine Augenbewegung des Fahrers erfasst wird.

4. Verfahren nach einem der vorgehenden Ansprüche,
**dadurch gekennzeichnet, dass**
die Kameras (2, 3.1 bis 3.n) automatisch bei Beenden einer Fahrt aktiviert werden.

5. Verfahren nach einem der vorgehenden Ansprüche,
**dadurch gekennzeichnet, dass**
als autonomer Fahrvorgang ein Einparkvorgang des Fahrzeugs ausgeführt wird.

## Claims

1. Method for performing an autonomous driving process of a motor vehicle, wherein
- a driver of the vehicle sitting on a driver's seat is detected by means of at least one camera (2) oriented into a vehicle interior,
**characterised in that**
- the driver is detected by means of at least one further camera (3.1 to 3.n) during and after leaving the vehicle interior, if he was previously detected by means of at the least one camera (2) after finishing a journey,
- a line of gaze of the driver is determined from data (D1 to Dn) gathered by means of the at least one further camera (3.1 to 3.n), and
- the execution of the autonomous driving process is exclusively enabled if it is detected that the driver directs his gaze towards the vehicle.

2. Method according to claim 1,
**characterised in that**
the execution of the autonomous driving process is interrupted if the driver directs his gaze away from the vehicle.

3. Method according to claim 1 or 2,
**characterised in that**
an eye movement of the driver is detected for determining the line of gaze.

4. Method according to any of the preceding claims,
**characterised in that**
the cameras (2, 3.1 to 3.n) are activated automatically on completion of a journey.

5. Method according to any of the preceding claims,
**characterised in that**
a parking process of the vehicle is performed as autonomous driving process.

## Revendications

1. Procédé pour effectuer un processus de conduite autonome d'un véhicule,
- au moyen d'au moins une caméra (2) montée dans un habitacle du véhicule, un conducteur assis dans le siège du conducteur du véhicule étant détecté,
**caractérisé en ce que**
- le conducteur est détecté pendant ou après qu'il a quitté l'habitacle du véhicule au moyen d'au moins une autre caméra (3.1 à 3.n), lorsqu'il a été détecté avant, à la fin d'une conduite, au moyen de ladite caméra (2),
- à l'aide de données (D1 à Dn) détectées par ladite autre caméra (3.1 à 3.n) une direction de regard du conducteur est déterminée et
- l'exécution du processus de conduite autonome est ensuite validé, lorsqu'il est détecté que le conducteur oriente son regard vers le véhicule.

2. Procédé selon la revendication 1, **caractérisé en ce que** l'exécution du processus de conduite autonome est interrompu lorsque le conducteur ne regarde plus le véhicule.

3. Procédé selon la revendication 1 ou la revendication 2, **caractérisé en ce que** pour déterminer la direction du regard, un mouvement d'œil du conducteur est détecté.

4. Procédé selon l'une quelconque des revendications précédentes, **caractérisé en ce que** les caméras (2, 3.1 à 3.n) sont désactivées automatiquement à la fin de la conduite.

5. Procédé selon l'une quelconque des revendications précédentes, **caractérisé en ce qu'**un processus de stationnement du véhicule est exécuté comme un processus de conduite autonome.
